# EUROPEAN PATENT APPLICATION

(11) **EP 2 413 422 A1**
(43) Date of publication of application: **01.02.2012**
(21) Application number: 11175366.1
(22) Date of filing: 26.07.2011
(51) Int. Cl.: H01M 10/50, H01M 8/02, H01M 8/04

(54) **Stack having uniform temperature distribution and method of operating the same**

(30) Priority: 30.07.2010 KR 20100074386
(71) Applicant: SAMSUNG ELECTRONICS CO., LTD., Suwon-si Gyeonggi-do 442-742 (KR)
(72) Inventor: Song, Tae-won, 449-712 Gyeonggi-do (KR); Choi, Kyoung-hwan, 449-712 Gyeonggi-do (KR); Yi, Jung-seok, 449-712 Gyeonggi-do (KR); Kim, Ji-rae, 449-712 Gyeonggi-do (KR)
(74) Representative: Greene, Simon Kenneth

(57) **Abstract**

A stack and a method of operating the stack. A method of operating a stack having a plurality of cells and a plurality of cooling plates includes: supplying a working fluid to a first group of the cooling plates; and re-supplying the working fluid passed through the first group of the cooling plates to a second group of the cooling plates, wherein the first and second groups are divided according to an operating temperature in the stack.

## Description

### BACKGROUND

### 1. Field

Aspects of the present disclosure relate to a heat source, and more particularly to a stack having a uniform temperature distribution, as well as a method of operating the same.

### 2. Description of the Related Art

When a fuel cell stack is in a normal operation, the temperature of the interior of the fuel cell stack increases due to the heat generated from the electrochemical reaction in the fuel cells. The increase in temperature of the fuel cell stack is limited to a predetermined level by disposing cooling plates at predetermined intervals.

However, a thermal gradient having a parabolic shape is formed between cooling plates. Since heat is transferred to the outside through end plates, a thermal gradient is also formed in the interior of the fuel cell stack. The temperature of fuel cells near the end plates, that is, the operating temperature of the end cells, is lower than that of cells in a central region of the fuel cell stack. Due to the temperature difference between the end plates and the central region of the fuel cell stack, non-uniformity of performance of the fuel cells included in the fuel cell stack may increase and lifetime of the fuel cells included in the fuel cell stack may decrease.

In particular, the temperature near an inlet of a stack in which a cold working fluid flows and the temperature near an outlet of a stack area are lower than that of the rest of a stack.

The temperature of a bipolar plate in a fuel cell stack may be preheated to 100 °C or above to avoid the possibility of phosphoric acid leak due to the condensation of steam generated from an electrochemical reaction. For this, the fuel cell stack may be preheated before applying a load to the fuel cell stack.

However, in the case of conventional fuel cell stack, the configuration of the fuel cell stack is complicated and the total volume of the fuel cell stack is increased since the preheating to 100 °C or above takes a long time and an additional heat source for preheating is needed.

### SUMMARY

Aspects of the present invention provide a stack having a uniform temperature distribution without an additional heat source.

Aspects of the present invention provide a method of operating the stack.

According to an aspect of the present invention, there is provided a method of operating a stack having a plurality of cells and a plurality of cooling plates, the method including: supplying a working fluid to a first group of the cooling plates; and re-supplying the working fluid passed through the first group of the cooling plates to a second group of the cooling plates, wherein the first and second groups are divided according to an operating temperature in the stack.

The stack may be a fuel cell stack and the cells are fuel cells.

The first group of the cooling plates may be located on both ends of the fuel cell stack and the second group of the cooling plates may be located in a central region of the fuel cell stack.

The first group of the cooling plates may be located in a central region of the fuel cell stack and the second group of the cooling plates may be located on both ends of the fuel cell stack.

Each cooling plate of the fuel cell stack may belong to one of the first group and the second group.

The working fluid supplied to the first group may be preheated by circulating in the fuel cell stack.

The working fluid supplied to the first group may be preheated at the outside of the fuel cell stack using a heating device.

The method may further include controlling a flow rate of the working fluid supplied to the second group of the cooling plates.

The working fluid passed through the first group of the cooling plates may be divided into two streams in directions different from each other.

The stack may be a battery pack and the cells are battery cells.

According to another aspect of the present invention, there is provided a stack including: a plurality of cells; first and second groups of cooling plates located between the cells, each cooling plate including a working fluid inlet and a working fluid outlet; a working fluid supply manifold in fluid communication with one or more of the working fluid inlets of the first group of cooling plates to supply a working fluid to the first group of cooling plates; and a working fluid resupply manifold in fluid communication with one or more of the working fluid outlets of the first group of cooling plates and one or more of the working fluid inlets of the second group of cooling plates to resupply the working fluid passed through the first group of cooling plates to the second group of cooling plates.

The stack may be a fuel cell stack and the cells may be fuel cells.

The stack may further include a working fluid outlet manifold in fluid communication with one or more of the working fluid outlets of the second group of cooling plates to convey the working fluid passed through the second group of cooling plates to outside of the fuel cell stack.

The first group of cooling plates may be located on both ends of the fuel cell stack and the second group of cooling plates may be located in a central region of the fuel cell stack.

The number of fuel cells per cooling plate in a central region of the fuel cell stack may be greater than that in both end regions of the fuel cell stack.

The number of fuel cells per cooling plate on one end of the fuel cell stack may be greater than that on the other end of the fuel cell stack.

The stack may further include a flow controller on the working fluid resupply manifold.

Each cooling plate in the fuel cell stack may belong to one of the first group and the second group.

The working fluid supply manifold may be in fluid communication with the working fluid inlet of each of the first group of cooling plates.

The working fluid resupply manifold may be in fluid communication with the working fluid outlet of each of the first group of cooling plates.

The working fluid resupply manifold may be in fluid communication with the working fluid inlet of each of the second group of cooling plates.

The stack may be a battery pack and the cells are battery cells.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings, of which:
FIG. 1 is a perspective view of a fuel cell stack according to an embodiment;
FIGS. 2 and 3 are front views of cooling plates of a first cooling plate group included at both ends of the fuel cell stack of FIG. 1;
FIG. 4 is a front view of a cooling plate of a second cooling plate group that is included in a central region of the fuel cell stack between cooling plates of the first cooling plate groups of the fuel cell stack of FIG. 1;
FIG. 5 is a perspective view of a fuel cell stack according to another embodiment;
FIG. 6 is a cross-sectional view taken along a direction vertical to the y-axis direction of the fuel cell stack of FIG. 5;
FIG. 7 is a perspective view of a fuel cell stack according to another embodiment;
FIG. 8 is a cross-sectional view taken along a direction vertical to the y-axis direction of the fuel cell stack of FIG. 7;
FIG. 9 is a cross-sectional view showing another embodiment in which cooling plates and bipolar plates are symmetrically disposed about the center of a fuel cell stack;
FIG. 10 is a magnified cross-sectional view of a predetermined region of FIG. 9;
FIG. 11 is a cross-sectional view showing another embodiment in which constituent elements are asymmetrically disposed about the center of a fuel cell stack;
FIG. 12 is a cross-sectional view showing another embodiment in which the number of bipolar plates between cooling plates is different in an inner region of the fuel cell stack;
FIGS. 13 through 29 are cross-sectional views showing methods of operating (circulating working fluid) a fuel cell stack according to other embodiments;
FIG. 30 is a graph showing simulated results for a method of operating a fuel cell stack according to a conventional method and a method of operating a fuel cell stack according to embodiments;
FIGS. 31 and 32 are graphs respectively showing simulated results of temperature changes according to time with respect to a conventional method of operating a fuel cell stack and a method of operating a fuel cell stack according to embodiments; and
FIG. 33 is a graph showing simulated results of temperature distribution in a fuel cell stack according to temperature variation of a working fluid in a method of operating a fuel cell stack according to an embodiment.

### DETAILED DESCRIPTION

Reference will now be made in detail to embodiments, examples of which are illustrated in the accompanying drawings, wherein like reference numerals refer to the like elements throughout.

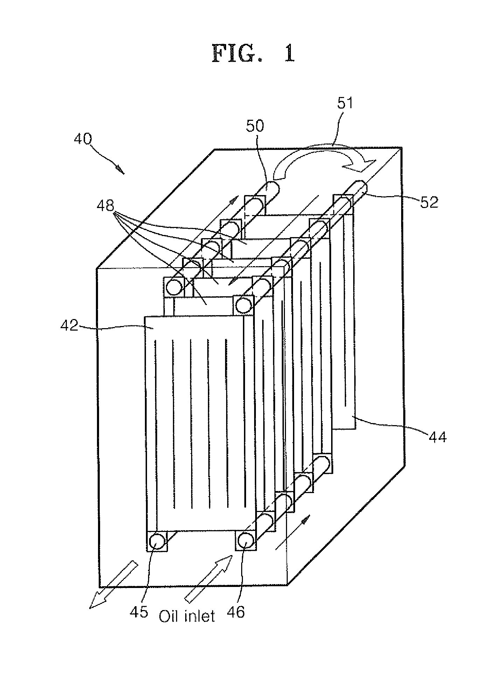

First, a fuel cell stack according to an embodiment will now be described. FIG. 1 is a perspective view of a fuel cell stack according to an embodiment. Referring to FIG. 1, the fuel cell stack 40 includes first cooling plate group 42 and 44 and a second cooling plate group 48. The first cooling plate group 42 and 44 may include cooling plates included in a region where an already measured operating temperature is relatively lower than the rest of the regions in the fuel cell stack 40. For example, as depicted in FIG. 1, the first cooling plate group 42 and 44 may include cooling plates located on both ends of the fuel cell stack 40. However, this is only an example, and the first cooling plate group may include cooling plates in other predetermined regions according to an already measured operating temperature.

Here, the "operating temperature" may denote the temperature of a fuel cell stack when the fuel cell stack is in normal operation For example, during operation of a fuel cell stack, the temperature of an end or both ends of the fuel cell stack may be lower than that of a central region of the fuel cell stack due to the incoming and outgoing of a working fluid (deionized water, oil, silicone oil, mineral oil, ethylene glycol or propylene glycol) through the end or both ends of the fuel cell stack. Accordingly, temperature deviation between fuel cells according to positions of the full cells may occur in the fuel cell stack. In this way, the operating temperature may denote the temperature measured inside the fuel cell stack during an operation of the fuel cell stack.

A plurality of cooling plates of a fuel cell stack may be divided at least into two cooling plate groups according to an already-measured operating temperature inside the fuel cell stack. An example may be the first cooling plate group 42 and 44 and second cooling plate group 48.

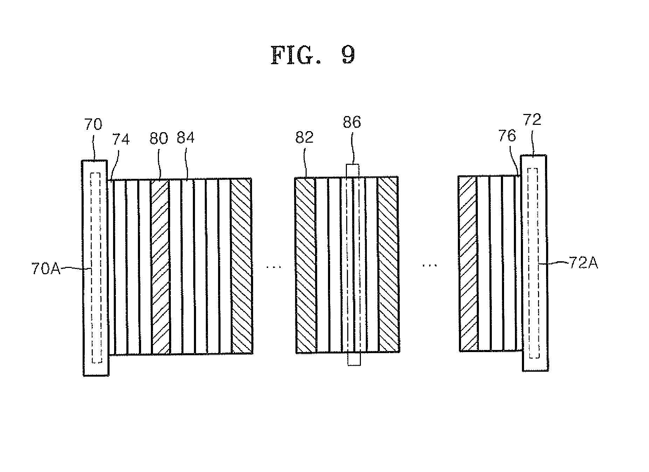

Although not shown in FIG. 1, as shown in FIGS. 9, 11, and 12, end plates 70 and 72 (refer to FIG. 9) are included on outer sides of the first cooling plate group 42 and 44. The first cooling plate group 42 and 44 may include cooling plates located near the end plates 70 and 72. For example, the first cooling plate group 42 and 44 may include two cooling plates, one on each end of the fuel cell stack 40, but not limited thereto, and may include at least one cooling plate located on both ends thereof where the operating temperature is relatively low.

Also, the second cooling plate group 48 may include a plurality of cooling plates included between the both ends of the fuel cell stack 40, that is, in a central region of the fuel cell stack 40. Cooling plates of the first cooling plate group 42 and 44, and second cooling group 48 may absorb heat from neighboring fuel cells. Working fluid paths are formed on surfaces of the cooling plates of the first cooling plate group 42 and 44 and second cooling group 48. A working fluid that passes through the first cooling plate group 42 and 44 and second cooling group 48 flows through the working fluid paths. The working fluid absorbs heat from fuel cells adjacent to the corresponding cooling plates while moving through the working fluid paths. The working fluid paths may be included on a side or both sides of the cooling plates.

As described above, the cooling plates of the first and second cooling plate groups 42, 44, and 48 basically absorb heat from adjacent fuel cells. However, since preheated working fluid may be supplied to the cooling plates included in a location where the operating temperature is relatively low, the cooling plates may also perform a function of supplying heat to the fuel cells adjacent thereto. An example of this case is that a preheated working fluid is supplied to cooling plates located on an end or both ends of a fuel cell stack when the fuel cell stack starts up.

Next, for convenience of explanation, FIG. 1 depicts that the second cooling plate group 48 includes four cooling plates. However, the second cooling plate group 48 may include a larger number of cooling plates. Also, FIG. 1 depicts that the cooling plates of the first and second cooling plate groups 42, 44, and 48 are arranged in a row. A plurality of bipolar plates may be included between the cooling plates. However, for simplicity of drawing, the bipolar plates are omitted in FIG. 1.

The fuel cell stack 40 may include a plurality of cooling manifolds, for example, first through fourth cooling manifolds 45, 46, 50, and 52. The first through fourth cooling manifolds 45, 46, 50, and 52 may include a working fluid supply manifold that is used for a path supplying a working fluid to the fuel cell stack 40, first to a selected portion of the cooling plates (for example, the second cooling plate group 48) and next to the other portion of the cooling plates (for example, the first cooling plate group 42 and 44). The working fluid supply manifold may be the second cooling manifold 46.

In FIG. 1, if the flow of the working fluid is reversed, the first cooling manifold 45 may be the working fluid supply manifold and the second cooling manifold 46 may be a working fluid outlet manifold. Here, "via the cooling plates" denotes that, as described above, the working fluid flows along the working fluid paths formed on the cooling plates.

Referring to FIG. 1, each of the first through fourth cooling manifolds 45, 46, 50, and 52 may be connected to a portion or all of the cooling plates of the first and second cooling plate groups 42, 44, and 48. A portion of the first through fourth cooling manifolds 45, 46, 50, and 52 may be working fluid supply manifolds which are used as paths for supplying a working fluid to working fluid inlet units of the cooling plates, another portion of the first through fourth cooling manifolds 45, 46, 50, and 52 may be working fluid outlet manifolds which are used as paths for conveying the working fluid discharged from working fluid outlet units of the cooling plates to the outside, and still another portion of the first through fourth cooling manifolds 45, 46, 50, and 52 may be working fluid resupply manifolds which are used as paths for moving or re-supplying the working fluid discharged from the working fluid outlet units of the cooling plates to other cooling plates of the fuel cell stack 40.

A working fluid supplied to the second cooling plate group 48 in the central region of the fuel cell stack 40 via the second cooling manifold 46, which is a working fluid supply manifold, flows to the third cooling manifold 50 through working fluid outlet units of the cooling plates of the second cooling plate group 48. The working fluid discharged from the working fluid outlet units of the cooling plates of the second cooling plate group 48 may flow to the first cooling plate group 42 and 44 via the third and fourth cooling manifolds 50 and 52. Thus, the third and fourth cooling manifolds 50 and 52 may be working fluid resupply manifolds for moving or re-supplying the working fluid discharged from the second cooling plate group 48 to the first cooling plate group 42 and 44. The third cooling manifold 50 may be connected to the fourth cooling manifold 52 by extending to the outside of the fuel cell stack 40.

The working fluid may be oil, silicone oil, mineral oil, ethylene glycol, propylene glycol or deionized water. The first cooling manifold 45 may be a path for discharging a working fluid discharged from the first cooling plate group 42 and 44 to the outside of the fuel cell stack 40. Accordingly, the first cooling manifold 45 may be a working fluid outlet manifold. The first cooling manifold 45 may be connected to at least a lower left-end of the first cooling plate group 42 and 44. At the same time, the first cooling manifold 45 may be connected to a lower left-end of the second cooling plate group 48. For these connections, the lower left-ends of the first and second cooling plate groups 42, 44, and 48 may protrude to be connected to the first cooling manifold 45. The first cooling manifold 45 may be a path for conveying the working fluid that flows into the first cooling plate group 42 and 44 to the outside of the fuel cell stack 40. Thus, although the first cooling manifold 45 may be connected to the second cooling plate group 48, working fluid paths (not shown) formed on the cooling plates of the second cooling plate group 48 do not contact the first cooling manifold 45. Accordingly, the working fluid that flows into the second cooling plate group 48 is not discharged through the first cooling manifold 45. The working fluid circulated in the cooling plates in the fuel cell stack 40 is conveyed to the outside of the fuel cell stack 40 through the first cooling manifold 45. The second cooling manifold 46 is a path for supplying a working fluid into the fuel cell stack 40 from the outside. The working fluid conveyed to the outside of the fuel cell stack 40 through the first cooling manifold 45 may be re-supplied to the fuel cell stack 40 through the second cooling manifold 46 after passing through an external circulation path. The second cooling manifold 46 is connected to the lower right-ends of the first and second cooling plate groups 42 and 48. For these connections, the lower right-ends of the first and second cooling plate groups 42 and 48 may protrude to be connected to the second cooling manifold 46. A working fluid flowing into the fuel cell stack 40 through the second cooling manifold 46 is supplied to the second cooling plate group 48. However, the second cooling manifold 46 does not contact the working fluid paths of the first cooling plate group 44. Thus, the working fluid coming in through the second cooling manifold 46 is not supplied to the first cooling plate group 44. The third cooling manifold 50 is connected to an upper left-end of the second cooling plate group 48, and is connected to the upper left-ends of the first cooling plate group 44. For this connection, the upper left-ends of the cooling plates of the second cooling plate group 48 and the first cooling plate group 44 may protrude to be connected to the third cooling manifold 50. The third cooling manifold 50 may be a path for discharging the working fluid that passed through the second cooling plate group 48. A working fluid that flows into the third cooling manifold 50 flows into the fourth cooling manifold 52 as indicated by an arrow 51. For this, a connection manifold (not shown) for connecting the third cooling manifold 50 to the fourth cooling manifold 52 may be included between the third cooling manifold 50 and the fourth cooling manifold 52. The connection manifold may be installed outside the fuel cell stack 40 or inside the end plates (for example, 72 in FIG. 9) of the fuel cell stack 40. The fourth cooling manifold 52 is connected to upper right-ends of the first and second cooling plate groups 42, 44, and 48. For these connections, the upper right-ends of the first and second cooling plate groups 42, 44, and 48 may protrude to be connected to the fourth cooling manifold 52. A working fluid that flows into the fourth cooling manifold 52 through the third cooling manifold 50 and the connection manifold is not supplied to the second cooling plate group 48, but is supplied to the first cooling plate group 42 and 44. The working fluid supplied through the fourth cooling manifold 52 flows to the outside of the fuel cell stack 40 through the first cooling manifold 45 after passing through the first cooling plate group 42 and 44. In FIG. 1, arrows indicate the moving direction of the working fluid.

Meanwhile, a working fluid may flow in a reverse direction. For example, the working fluid may be supplied through the first cooling manifold 45. At this point, the first cooling manifold 45 may be a working fluid supply manifold. A working fluid supplied to the first cooling manifold 45 may flow to the outside of the fuel cell stack 40 via the first cooling plate group 42 and 44, the fourth cooling manifold 52, the connection manifold, the third cooling manifold 50, the second cooling plate group 48, and the second cooling manifold 46. At this point, the second cooling manifold 46 is a working fluid outlet manifold.

Alternatively, if the connection manifold connects the third cooling manifold 50 to the first cooling manifold 45 instead of connecting the third cooling manifold 50 to the fourth cooling manifold 52, the working fluid supplied to the third cooling manifold 50 may flow to the outside of the fuel cell stack 40 via the first cooling plate group 42 and 44 and the fourth cooling manifold 52 after moving to the first cooling manifold 45 via the connection manifold. At this point, the fourth cooling manifold 52 may be a working fluid outlet manifold.

Also, alternatively, the connection manifold may connect the third cooling manifold 50 to the first cooling manifold 45, and the working fluid may inflow through the fourth cooling manifold 52 from the outside of the fuel cell stack 40. In this case, the working fluid may flow sequentially through the fourth cooling manifold 52, the first cooling plate groups 42 and 44, the first cooling manifold 45, the connection manifold, the third cooling manifold 50, the second cooling plate group 48, and the second cooling manifold 46. At this point, the second cooling manifold 46 may be a working fluid outlet manifold.

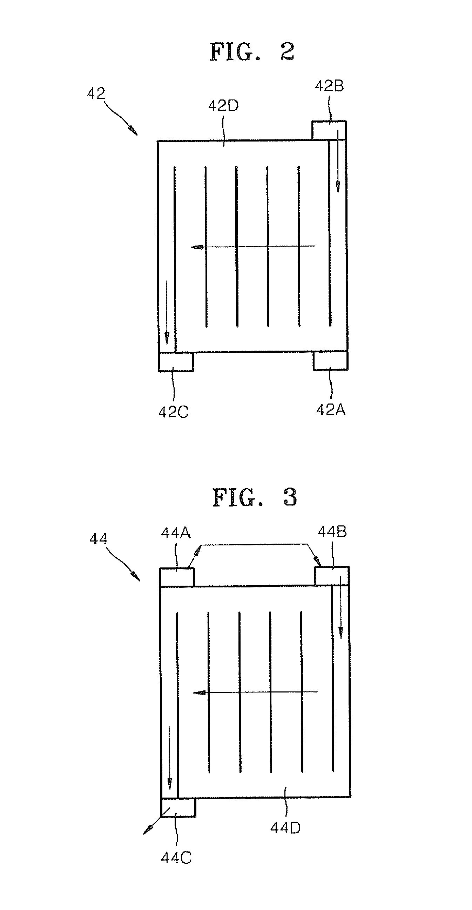

FIG. 2 is a front view of a cooling plate of the first cooling plate group 42 connected to the first, second, and fourth cooling manifolds 45, 46, and 52 of the fuel cell stack 40 of FIG. 1. Referring to FIG. 2, the cooling plate 42 includes a main plate 42D having a structure through which a working fluid can flow, for example, a wick structure, and protrusion units 42A, 42B, and 42C respectively formed on a lower right-end, an upper right-end, and a lower left-end of the main plate 42D. In FIG. 2, arrows indicate directions of working fluid flow.

FIG. 3 is a front view of the cooling plate of the first cooling plate group 44 connected to the first, third and fourth cooling manifold 45, 50, and 52 of the fuel cell stack 40 in FIG. 1. Referring to FIG. 3, the cooling plate 44 includes a main plate 44D having, for example, a wick structure, and protrusion units 44A, 44B, and 44C respectively formed on an upper left-end, an upper right-end, and a lower left-end of the main plate 44D. In FIG. 3, arrows indicate directions of working fluid flow.

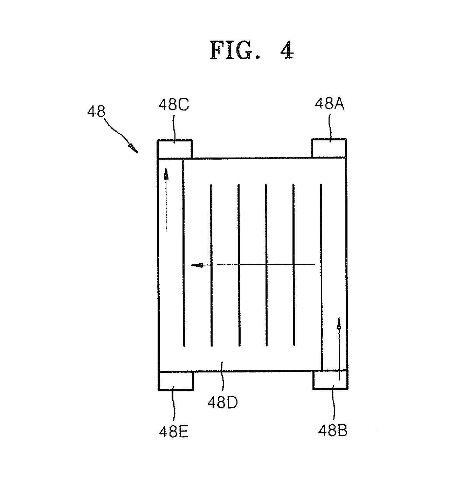

FIG. 4 is a front view of a cooling plate of the second cooling plate group 48 of FIG. 1. Referring to FIG. 4, the cooling plate 48 includes a main plate 48D and protrusion units 48A, 48B, 48C, and 48E respectively formed on an upper right-end, a lower right-end, and an upper left-end, and a low left-end of the main plate 48D. In FIG. 4, arrows indicate directions of working fluid flow.

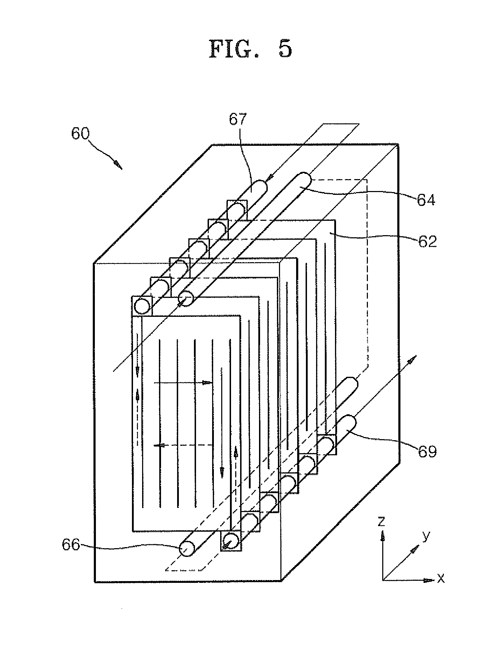

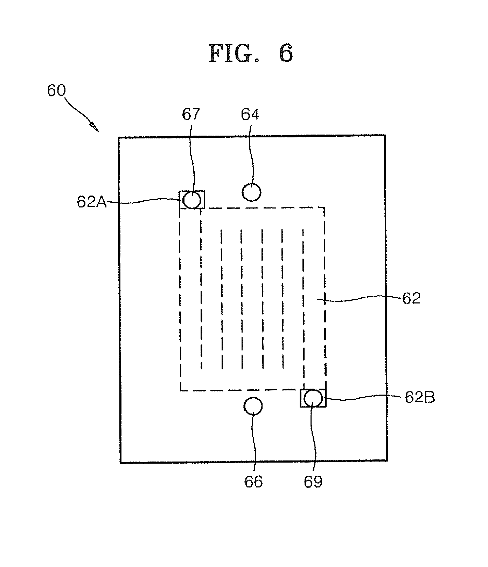

FIG. 5 is a perspective view of a fuel cell stack 60 according to another embodiment. Referring to FIG. 5, the fuel cell stack 60 includes a plurality of cooling plates 62 and fifth through eighth cooling manifolds 64, 66, 67, and 69. The fifth and sixth cooling manifolds 64 and 66 are included within the fuel cell stack 60. The fifth and sixth cooling manifolds 64 and 66 are respectively provided on and under the cooling plates 62, and are separated from the cooling plates 62. The seventh cooling manifold 67 is connected to upper left-ends of the cooling plates 62. For this connection, protrusion units 62A (refer to FIG. 6) may be included on upper left-ends of the cooling plates 62. The eighth cooling manifold 69 is connected to lower right-ends of the cooling plates 62. For this connection, protrusion units 62B (refer to FIG. 6) may be included on lower right-ends of the cooling plates 62.

A working fluid may be supplied to the fuel cell stack 60 from the outside through the fifth cooling manifold 64. The working fluid may be supplied to the fuel cell stack 60 through the sixth cooling manifold 66 instead of through the fifth cooling manifold 64. The fuel cell stack 60 may include both of the fifth and sixth cooling manifolds 64 and 66, but one of the fifth and sixth cooling manifolds 64 and 66 may be omitted. In other words, one of the fifth and sixth cooling manifolds 64 and 66 is optional. If the fuel cell stack 60 includes only the fifth cooling manifold 64, the working fluid may flow sequentially through the fifth cooling manifold 64, the seventh cooling manifold 67, the cooling plates 62, and the eighth cooling manifold 69 as indicated by solid-line arrows.

When the fuel cell stack 60 includes both the fifth and sixth cooling manifolds 64 and 66, the working fluid supplied to the fifth cooling manifold 64 flows sequentially through the sixth cooling manifold 66, the eighth cooling manifold 69, the cooling plates 62, and the seventh cooling manifold 67 as indicated by dashed-line arrows.

In the above-described flow process, the working fluid absorbs heat generated from fuel cells included between the cooling plates 62 of the fuel cell stack 60 while passing through the fifth cooling manifold 64 or the fifth and sixth cooling manifolds 64 and 66. Accordingly, the working fluid that passes through the fifth cooling manifold 64 or the fifth and sixth cooling manifolds 64 and 66 may be preheated. The preheated working fluid flows into the cooling plates 62 through the seventh cooling manifold 67 or the eighth cooling manifold 69. Thus, the start-up time of the fuel cell stack 60 can be reduced by reducing the preheating time of the fuel cell stack 60, and also the temperature deviation and the voltage deviation inside the fuel cell stack 60 can be reduced.

For the working fluid flow described above, a connection manifold may be included between the fifth and seventh cooling manifolds 64 and 67. Also, a connection manifold may be included between the fifth and sixth cooling manifolds 64 and 66. Also, a connection manifold may be included between the sixth and eighth cooling manifolds 66 and 69. The connection manifolds may be included within end plates provided in the fuel cell stack 60 or outside the fuel cell stack 60.

FIG. 6 is a cross-sectional view taken along a direction vertical to the y-axis direction of the fuel cell stack 60 of FIG. 5. Referring to FIG. 6, it is seen that the fifth and sixth cooling manifolds 64 and 66 respectively are included on and under the cooling plates 62, and are separated from the cooling plates 62.

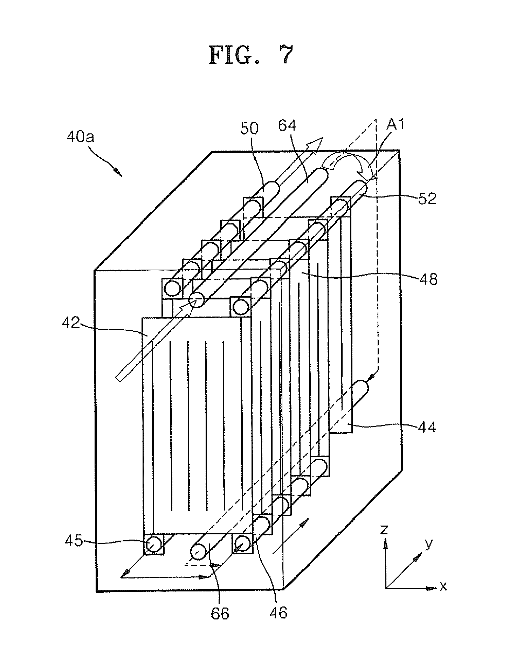

FIG. 7 is a fuel cell stack 40a according to another embodiment. The fuel cell stack 40a in FIG. 7 corresponds to the combined fuel cell stack 40 of FIG. 1 and the fuel cell stack 60 of FIG. 5. Like reference numerals are used to indicate elements that are substantially identical to the elements of FIGS. 1 and 5, and thus the descriptions thereof will not be repeated.

Referring to FIG. 7, the fuel cell stack 40a further includes at least one of fifth and sixth cooling manifolds 64 and 66 besides the first through fourth cooling manifolds 45, 46, 50, and 52. If only the fifth cooling manifold 64 is included, a working fluid supplied to the fifth cooling manifold 64 flows sequentially through the fourth cooling manifold 52, the first cooling plate group 42 and 44, the first cooling manifold 45, the second cooling manifold 46, the second cooling plate group 48, and the third cooling manifold 50. Alternatively, the working fluid supplied to the fifth cooling manifold 64 may flow sequentially through the third cooling manifold 50, the second cooling plate group 48, the second cooling manifold 46, the first cooling manifold 45, the first cooling plate group 42 and 44, and the fourth cooling manifold 52. For the working fluid flow described above, the fuel cell stack 40a may include a connection manifold (not shown) that connects the fifth cooling manifold 64 to the fourth cooling manifold 52 or the third cooling manifold 50. Also, the fuel cell stack 40a may include a connection manifold (not shown) that connects the first cooling manifold 45 to the second cooling manifold 46.

When the fuel cell stack 40a includes both the fifth and sixth cooling manifolds 64 and 66, a working fluid supplied to the fifth cooling manifold 64 may flow sequentially through the sixth cooling manifold 66, the second cooling manifold 46, the second cooling plate group 48, the third cooling manifold 50, the fourth cooling manifold 52, the first cooling plate group 42 and 44, and the first cooling manifold 45. In this case, an inlet and an outlet of the working fluid may be on the same surface or on different surfaces of the fuel cell stack 40a. If the working fluid flows into the sixth cooling manifold 66, the working fluid may flow sequentially through the fifth cooling manifold 64, the fourth cooling manifold 52, the first cooling plate group 42 and 44, the first cooling manifold 45, the second cooling manifold 46, the second cooling plate group 48, and the third cooling manifold 50. In this case, an inlet and an outlet of the working fluid may be on the same surface or on different surfaces of the fuel cell stack 40a. Also, if the working fluid flows into the sixth cooling manifold 66, the working fluid may flow sequentially through the fifth cooling manifold 64, the third cooling manifold 50, the second cooling plate group 48, the second cooling manifold 46, the first cooling manifold 45, the first cooling plate group 42 and 44, and the fourth cooling manifold 52. Also, in this case, an inlet and an outlet of the working fluid may be on the same surface or on different surfaces of the fuel cell stack 40a.

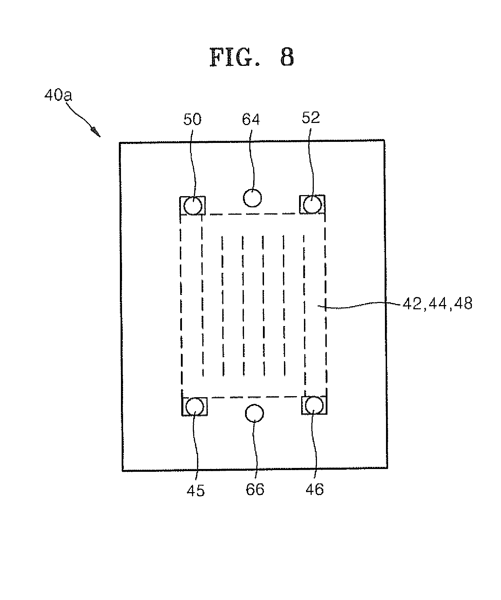

FIG. 8 is a cross-sectional view taken along a direction vertical to the y-axis direction of the fuel cell stack 40a of FIG. 7. Referring to FIG. 8, the fifth and sixth cooling manifolds 64 and 66 respectively are located on and under the first and second cooling plate groups 42, 44, and 48 and are separated from the first and second cooling plate groups 42, 44, and 48. A working fluid may absorb heat generated from fuel cells (not shown) included between the first and second cooling plate groups 42, 44, and 48 while passing through at least one of the fifth and sixth cooling manifolds 64 and 66. Accordingly, the working fluid that flows through the fifth and sixth cooling manifolds 64 and 66 may be preheated. In this way, since the preheated working fluid flows in advance through one of the first and second cooling plate groups 42, 44, and 48, the preheated working fluid may prevent the temperature of the fuel cells from rapidly changing due to the inflow of a cold working fluid. Also, the slow increase in temperature of the fuel cells located on both ends of the fuel cell stack 40a, that is, near the end plates, can be prevented. Also, since the heat generated from the fuel cell stack 40 is used, an additional heat source for heating the working fluid is unnecessary. Accordingly, the volume of the fuel cell stack 40a can be reduced.

FIG. 9 is a cross-sectional view showing another embodiment in which cooling plates and bipolar plates are symmetrically disposed about the center of a fuel cell stack. FIG. 9 shows an example configuration of the fuel cell stack, and for convenience, first through eighth cooling manifolds 45, 46, 50, 52, 64, 66, 67, and 69 described above are omitted in FIG. 9.

Referring to FIG. 9, the fuel cell stack includes first and second end plates 70 and 72, first and second current collection plates 74 and 76, a plurality of cooling plates 80 and 82, and a plurality of bipolar plates 84 which are between the first and second end plates 70 and 72. The first and second end plates 70 and 72 may include connection manifolds 70A and 72A described above. One of the first and second current collection plates 74 and 76 may be an anode plate and the other one may be a cathode plate. The first current collection plate 74 is connected to the first end plate 70, and the second current collection plate 76 is connected to the second end plate 72. The cooling plates 80 and 82 are arranged between the first and second current collection plates 74 and 76. The cooling plates 80 correspond to the first cooling plate group, and the cooling plates 82 correspond to the second cooling plate group. The cooling plates 80 and 82 are separated from each other. The bipolar plates 84 are included between the cooling plates 80 and 82. Also, the bipolar plates 84 are included between the first and second current collection plates 74 and 76 and the cooling plates 80. The number of bipolar plates 84 included between the first and second current collection plates 74 and 76 and the cooling plates 80 is less than the number of bipolar plates 84 included between the cooling plates 80 and 82. The number of bipolar plates 84 included between the cooling plates 80 and 82 may be equal to the number of bipolar plates 84 included between the cooling plates 82. Also, the number of bipolar plates 84 included between the first and second current collection plates 74 and 76 and the cooling plates 80 may be equal. Under this consideration, it is seen that the first and second current collection plates 74 and 76, the cooling plates 80 and 82, and the bipolar plates 84 are symmetrically arranged about the center between the first and second end plates 70 and 72.

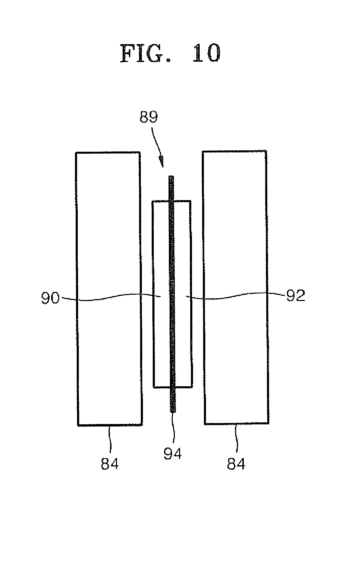

FIG. 10 is a magnified cross-sectional view of a predetermined region 86 that includes a contact surface between two adjacent bipolar plates 84 of FIG. 9. Referring to FIG. 10, a fuel cell, that is, a membrane electrode assembly (MEA) 89 is included between two bipolar plates 84 which are adjacent to each other. The MEA 89 includes an anode 90, a cathode 92, and a membrane 94 included between the anode 90 and the cathode 92. The bipolar plates 84 may be connected to the anode 90 and the cathode 92. Although not shown in FIG. 10, a fuel supply path may be formed on a surface of the bipolar plates 84 facing the anode 90 and an oxygen supply path for supplying oxygen may be formed on a surface of the bipolar plates 84 facing the cathode 92.

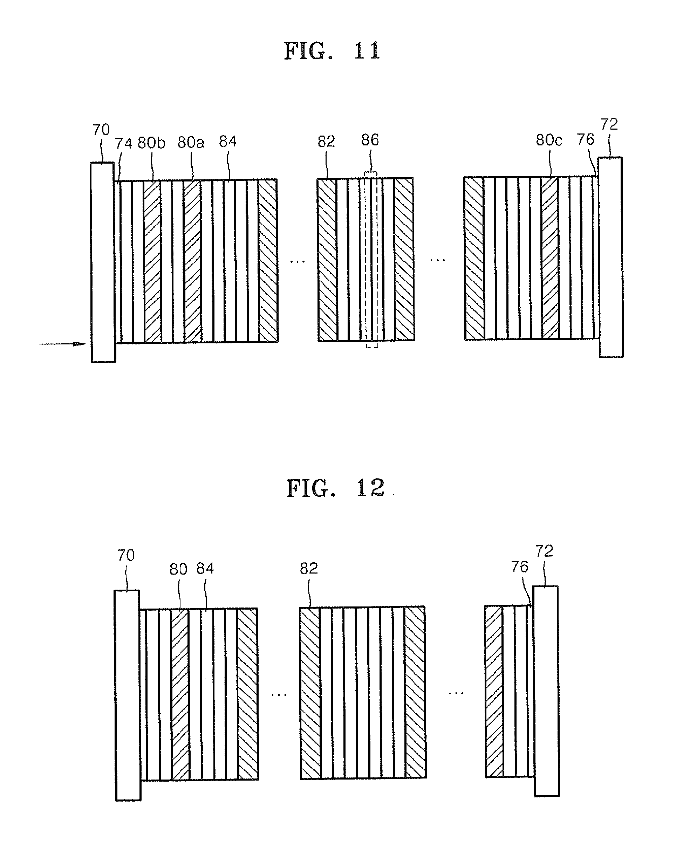

FIG. 11 is a cross-sectional view showing another embodiment in which constituent elements are asymmetrically disposed about the center of a fuel cell stack. FIG. 11 shows an example configuration of a fuel cell stack and, for convenience, the first through eighth cooling manifolds 45, 46, 50, 52, 64, 66, 67, and 69 described above are omitted in FIG. 11.

The basic configuration of the fuel cell stack of FIG. 11 may be the same as that of the fuel cell stack of FIG. 9. However, in the fuel cell stack of FIG. 11, the number and arrangement of elements included between the first and second current collection plates 74 and 76 may differ from that of the fuel cell stack of FIG. 9.

Referring to FIG. 11, the number of cooling plates 80a, 80b, and 80c corresponding to the first cooling plate group described above may be asymmetrical about the center of the fuel cell stack. In FIG. 11, an arrow indicates the direction of working fluid in flow.

More specifically, while two cooling plates 80a and 80b are near the first end plate 70, that is, in a location close to the first current collection plate 74, and one cooling plate 80c may be near the second end plate 72, that is, in a location close to the second current collection plate 76. The configuration and location relationship of the cooling plates 82 included between the first and second end plates 70 and 72 and the number of bipolar plates 84 between the cooling plates 82 may be the same as that of the fuel cell stack of FIG. 9. The number of bipolar plates 84 between the two cooling plates 80a and 80b included near the first end plate 70 and the number of bipolar plates 84 between the first current collection plate 74 and the cooling plate 80b, for example, two, may be smaller than the number of bipolar plates 84 provided between the cooling plates 82 included in the center region between the first and second end plates 70 and 72, that is, the center region of the fuel cell stack. Also, the number of bipolar plates 84 included between the second current collection 76 and the cooling plate 80c included near the second end plate 72 is less than the number of bipolar plates 84 included between the cooling plates 82 located in a central region of the fuel cell stack, but may be greater than the number of bipolar plates 84 included near the first end plate 70. In other words, in both ends of the fuel cell stack, the number of fuel cells per cooling plate in the end-side (the right-end of the fuel cell stack) that does not have a working fluid inlet is larger than that in the end-side (the left-end of the fuel cell stack) that has a working fluid inlet.

FIG. 12 is a cross-sectional view showing another embodiment in which the number of bipolar plates between cooling plates is different from above inside the fuel cell stack. FIG. 12 shows another example of arrangement of constituent elements in the fuel cell stack.

Referring to FIG. 12, the arrangement of cooling plates 80 and 82 between the first and second end plates 70 and 72 may be the same as the fuel cell stack of FIG. 9. However, the number of bipolar plates 84 between the cooling plates 80 and 82 may be different according to locations of the bipolar plates 84. For example, the number of bipolar plates 84 between the cooling plates 80 and 82 is largest in the central region between the first and second end plates 70 and 72, that is, in the central region of the fuel cell stack, and is gradually less towards the first and second end plates 70 and 72, that is, both ends of the fuel cell stack. In other words, the number of fuel cells per cooling plates 80 and 82 is larger in the central region of the fuel cell stack than in both ends of the fuel cell stack.

In this arrangement, since the number of fuel cells near the first and second end plates 70 and 72 is small, the time for increasing the temperature of fuel cells near the first and second end plates 70 and 72 can be reduced. Accordingly, the start-up time of the fuel cell stack can be reduced.

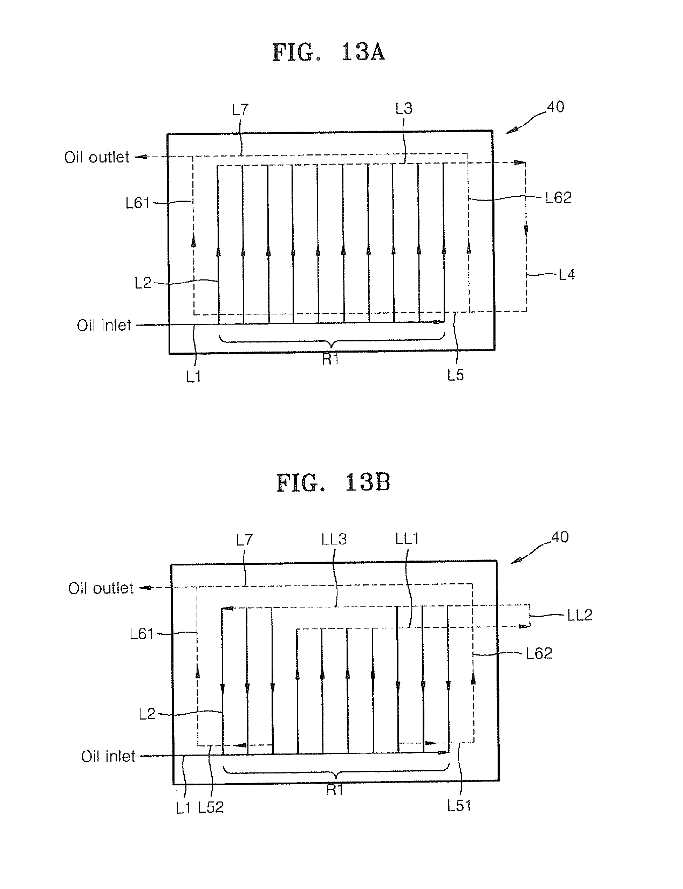

FIGS. 13 through 29 are cross-sectional views showing methods of operating (circulating working fluid) a fuel cell stack, according to other embodiments of the present invention. In FIGS. 13 through 29, each of a plurality of horizontal lines corresponds to one of the first through fourth cooling manifolds 45, 46, 50, and 52. Vertical lines on both ends represent the first cooling plate group 42 and 44, and vertical lines between the both ends represent the second cooling plate group 48. Arrows on the horizontal lines and the vertical lines indicate directions of working fluid flow.

Referring to FIG. 13A, a working fluid supplied to the fuel cell stack 40 via a second cooling manifold L1, which is a working fluid inlet manifold, may flow first through a portion of cooling plates and afterwards through the remaining portion of the cooling plates of the fuel cell stack 40.

More specifically, a working fluid supplied to the fuel cell stack 40 may flow first through a second cooling plate group L2 included in a central region R1 of the fuel cell stack 40. The second cooling manifold L1 may be connected to working fluid inlets of cooling plates that constitute the second cooling plate group L2. When the second cooling manifold L1 is used as a path for discharging the working fluid supplied to the fuel cell stack 40, the working fluid inlet of the cooling plate may be a working fluid outlet of the cooling manifold. The working fluid that is moved along the second cooling plate group L2 may flow along a third cooling manifold L3, and may flow to a first cooling manifold L5 along a connection manifold L4 provided on the outside of the fuel cell stack 40. The working fluid moved to the first cooling manifold L5 may flow to the outside of the fuel cell stack 40 along a fourth cooling manifold L7 after moving upwards via first cooling plate group L61 and L62 located on both ends of the fuel cell stack 40. The fourth cooling manifold L7 may be a working fluid outlet manifold. The working fluid flow described above may be a working fluid flow in normal operation with a load, that is, operation under a load.

The flow of a working fluid may be reversed in a start-up operation of the fuel cell stack 40. For example, a working fluid may be supplied through the fourth cooling manifold L7 and may pass first through the first cooling plate group L61 and L 62 located on both ends of the fuel cell stack 40, and afterwards may pass through the second cooling plate group L2 and be discharged to the outside of the fuel cell stack 40 through the second cooling manifold L1. In a start-up operation, the fourth cooling manifold L7 may be a working fluid inlet manifold and the second cooling manifold L1 may be a working fluid outlet manifold. A working fluid supplied through the fourth cooling manifold L7 may be working fluid preheated by a preheating device at the outside of the fuel cell stack 40.

In a start-up operation of the fuel cell stack 40, if there is a large temperature deviation between cooling plates of the first cooling plate group L61 and L62 included on both ends of the fuel cell stack 40, for example, if the temperature of a region where the cooling plates of the first cooling plate group L61 are located is lower than that of a region where the cooling plates of the first cooling plate group L62 are located, the flow of a working fluid preheated for start-up may be controlled to flow first through the cooling plates L61 and then through the cooling plates of the first cooling plate group L62.

When a start-up operation and a load operation are considered, the third cooling manifold L3, the connection manifold L4, and the first cooling manifold L5 may form a working fluid-moving manifold that moves (or supplies) a working fluid discharged from one selected portion (for example, the second cooling plate group L2) to the remaining portion (for example, the first cooling plate group L61 and L62) of the cooling plates.

The working fluid supplied to the fuel cell stack 40 may be preheated while circulating in the fuel cell stack 40. For example, as depicted in FIGS. 5 and 7, in the case of fuel cell stack 60 or 40a in which the fifth cooling manifold 64 and/or sixth cooling manifold 66 are included, a working fluid that passes through the fifth cooling manifold 64 and/or the sixth cooling manifold 66 in a start-up operation may be preheated by heat generated from fuel cells included in the fuel cell stack 60 or 40a. This case may be applied to other embodiments described below.

Alternatively, when the temperature deviation between fuel cells is increased due to the increase in the number of unit fuel cells in the fuel cell stack 40, that is, the increase in the number of bipolar plates, the flow of the working fluid may be controlled to pass first through the cooling plates adjacent to fuel cells having a large temperature deviation among the cooling plates of the second cooling plate group L2 included in the central region of the fuel cell stack 40.

For example, referring to FIG. 13B, a working fluid supplied through the second cooling manifold L1 may flow first through a central region R1 of the fuel cell stack 40. However, among the cooling plates in the central region R1 of the fuel cell stack 40, the working fluid may be supplied first to the four cooling plates located in the center of the central region R1 of the fuel cell stack 40. The working fluid that is supplied first to the four cooling plates in the central region R1 of the fuel cell stack 40 may be supplied to the rest of the cooling plates located in the central region R1 of the fuel cell stack 40 after passing through a cooling manifold LL1, a connection manifold LL2, and a cooling manifold LL3. The working fluid supplied to the rest of the cooling plates located in the central region R1 of the fuel cell stack 40 flows to the first cooling plate group L61 and L62 through cooling manifolds L51 and L52. The working fluid that moved to the first cooling plate group L61 and L62 may be discharged to the outside of the fuel cell stack 40 through the fourth cooling manifold L7.

The method of moving a working fluid, in which the working fluid is sequentially supplied to both ends of the fuel cell stack 40 and to the central region R1 of the fuel cell stack 40 or vice versa, may be applied to methods of operating a working fluid according to another embodiment of the present invention.

When a start-up operation and a load operation are considered, in FIG. 13B, the cooling manifolds LL1 and LL3 and the connection manifold LL2 may form a manifold that moves or resupplies the working fluid discharged from one selected portion of the cooling plates and to the rest portion of the cooling plates located in the central region R1 of the fuel cell stack 40. Also, the cooling manifolds L51 and L52 may form a manifold that moves or resupplies the working fluid discharged from selected cooling plates in the central region R1 of the fuel cell stack 40 and to the cooling plates of the first cooling plate group L61 and L62 located on both ends of the fuel cell stack 40. Also, the fourth cooling manifold L7 may be a working fluid outlet manifold or a working fluid inlet manifold.

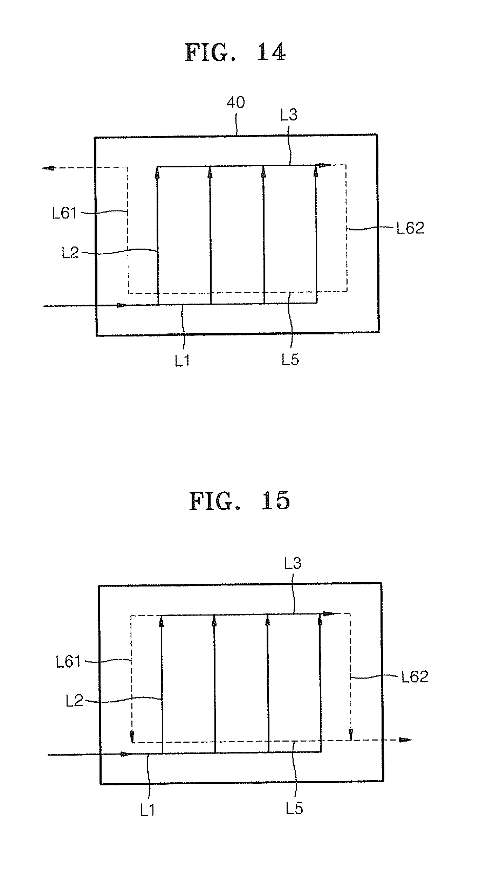

The description of cooling manifolds described above may be applied to the following embodiments. FIG. 14 shows a case in which a working fluid flows sequentially through cooling plate group. Referring to FIG. 14, a working fluid may inflow to a cooling manifold, for example, a second cooling manifold L1 below the first and second cooling plate groups L61, L62, and L2, may flow along the second cooling plate group L2, may flow to the right inside the fuel cell stack 40 along a cooling manifold above the second cooling plate group L2, for example, the third cooling manifold L3, and may flow downwards along the cooling plates of the first cooling plate group L62 located on the right-hand end of the inside of the fuel cell stack 40. Next, the working fluid may flow to the left side of the inside of the fuel cell stack 40 along the first cooling manifold L5, and then, may flow upwards along the cooling plate L61 located on the left-end of the inside of the fuel cell stack 40, and afterwards, may be discharged to the left side of the fuel cell stack 40 as shown in FIG. 14.

In the working fluid flow depicted in FIGS. 13A, 13B, and 14, the temperature of the working fluid increases while passing through the second cooling plate group L2 of the central region R1 of the fuel cell stack 40. Since the working fluid having an increased temperature flows along the first cooling plate group L61 and L62 located on both ends of the inside of the fuel cell stack 40, during start-up of the fuel cell stack 40, the start-up time of the fuel cell stack 40 can be reduced by shortening the time for increasing the temperature of fuel cells located on both ends of the inside of the fuel cell stack 40, that is, near the first and second end plates 70 and 72 (refer to FIG. 9). Also, a stable temperature range of, for example, about 140 to about 160 °C can be maintained during normal operation with a load.

Referring to FIG. 15, a working fluid inflows from the left side of the fuel cell stack 40 to a cooling manifold, for example, the second cooling manifold L1 below the first and second cooling plate groups L61, L62, and L2, flows along the second cooling plate group L2, flows to the left and right sides of the fuel cell stack 40 along a manifold, for example, the third cooling manifold L3 above the second cooling plate group L2, and flows downwards along the first cooling plate group L61 and L62 located on left and right-ends in the fuel cell stack 40, and afterwards, is discharged to the right side of the fuel cell stack 40 through the first cooling manifold L5 as shown in FIG. 15. Accordingly, the working fluid inlet and the working fluid outlet are located on opposite sides of the fuel cell stack 40.

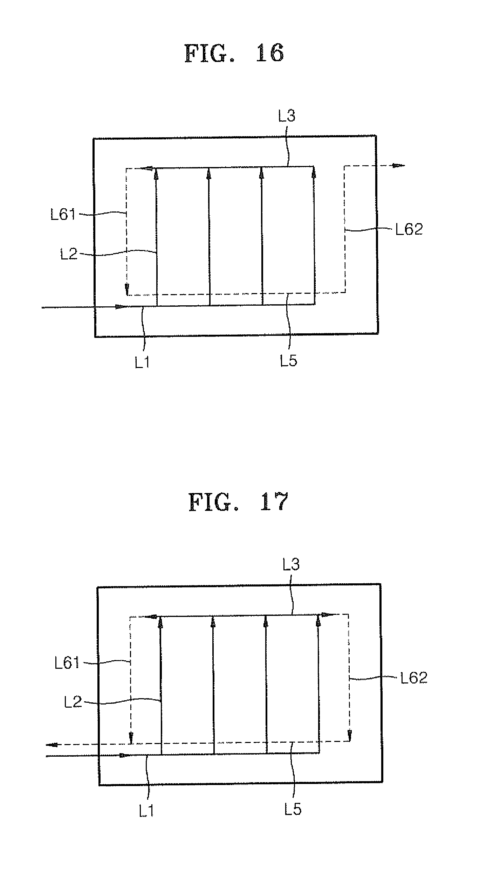

Referring to FIG. 16, the working fluid inflows to the second cooling manifold L1, flows along the second cooling plate group L2, flows to the left side of the inside of the fuel cell stack 40 along the third cooling manifold L3 on the second cooling plate group L2, and flows downwards along the cooling plate L61 located on a left-end of the inside of the fuel cell stack 40. Next, the working fluid flows to the right side of the inside of the fuel cell stack 40 along the first cooling manifold L5 and flows upwards along the cooling plate L62 located on a right-hand end of the inside of the fuel cell stack, and afterwards, is discharged to the right side of the fuel cell stack 40 as shown in FIG. 16. The working fluid inlet and the working fluid outlet are located on opposite sides of the fuel cell stack 40 and have different vertical locations from each other.

Referring to FIG. 17, the working fluid inflows from the left side of the fuel cell stack 40 to the second cooling manifold L1, flows along the second cooling plate group L2, flows to left and right sides of the inside of the fuel cell stack 40 along a manifold, for example the third cooling manifold L3 located above the second cooling plate group L2, and flows downwards along the first cooling plate group L61 and L62 located on both left and right-ends of the inside of the fuel cell stack 40. Afterwards, as shown in FIG. 17, the working fluid is discharged to the left side of the fuel cell stack 40 through the first cooling manifold L5. Accordingly, the working fluid inlet and the working fluid outlet are located on the same surface of the fuel cell stack 40.

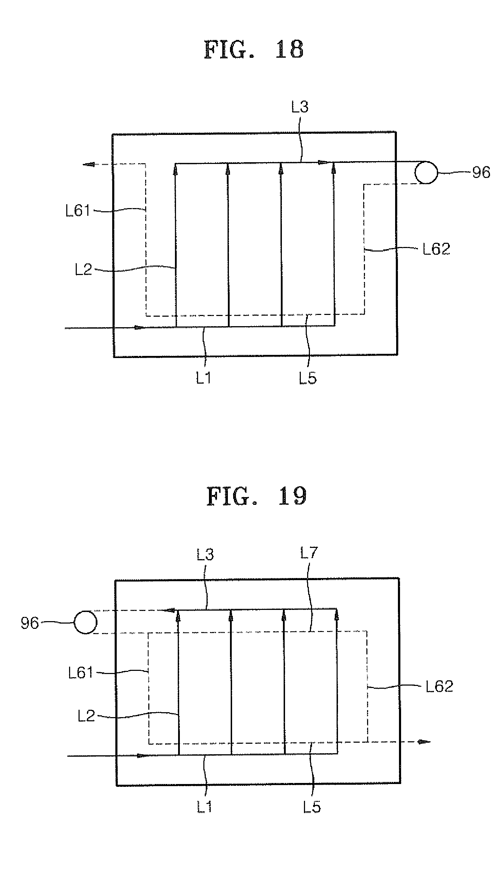

Referring to FIG. 18, the composition of a fuel cell stack and the flow of a working fluid may be basically the same as that described with reference to FIG. 14. However, in FIG. 18, a flow controller 96 is included on the working fluid flow path between the first cooling plate group L61 and L62 and the second cooling plate group L2. The flow controller 96 is placed between the right-end of the third cooling manifold L3 and the upper end of the cooling plate L62 located on the right-hand end of the inside of the fuel cell stack 40. Accordingly, the amount of working fluid that flows into the first cooling plate group L61 and L62 located on both ends of the inside of the fuel cell stack 40 from the third cooling manifold L3 may be controlled by the flow controller 96. In the case of the flow of FIG. 18, the flow rate of the total amount of working fluid may be controlled by the flow controller 96 since the working fluid flows sequentially through the first cooling plate group L62 and L61. The flow controller 96 may be, for example, an electronic proportional valve, a servo valve, a 3-way valve, or an ON/OFF valve.

Referring to FIG. 19, the working fluid inflows to the second cooling manifold L1 and flows to the second cooling plate group L2. Next, the working fluid flows through the third cooling manifold L3 and a flow controller 96 provided on the left side of the the fuel cell stack 40. A portion of the working fluid that passed through the flow controller 96 is discharged to the outside of the fuel cell stack 40 through the cooling plate L61 located on the left-end of the inside of the fuel cell stack 40 and the first cooling manifold L5, and the other portion of the working fluid is discharged to the outside of the fuel cell stack 40 through the fourth cooling manifold L7 and the cooling plate L62 located on the right-end of inside of the fuel cell stack 40. Accordingly, the working fluid inlet and the working fluid outlet are located on opposite sides of the fuel cell stack 40.

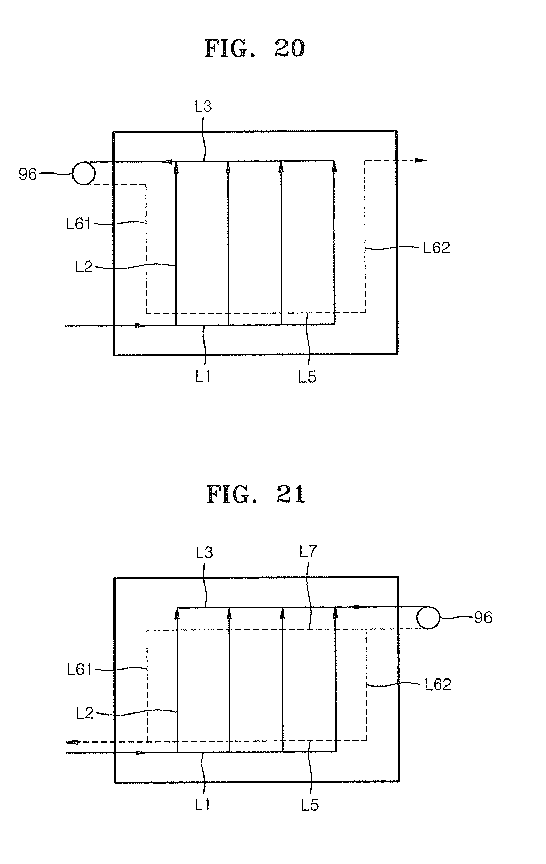

Referring to FIG. 20, the working fluid inflows to the second cooling manifold L1, flows to the second cooling plate group L2, and then, passes through the third cooling manifold L3 and a flow controller 96 provided on the left side of the fuel cell stack 40. The working fluid that passed through the flow controller 96 flows through the cooling plate of the first cooling plate group L61 located on the left-hand end of the inside of the fuel cell stack 40 and the first cooling manifold L5, and afterwards, is discharged to the right side of the fuel cell stack 40 through the cooling plate L62 located on the right-hand end of the inside of the fuel cell stack 40. In this case, the working fluid inlet and the working fluid outlet are located on opposite sides and have different vertical positions from each other.

FIG. 21 has a basic configuration that is similar to that of FIG. 19. However, the location of the flow controller 96 and the discharge direction of the working fluid are different from the configuration of FIG. 19.

Referring to FIG. 21, the working fluid that flows in the right direction through the third cooling manifold L3 passes through a flow controller 96 provided on the right side of the fuel cell stack 40. A portion of the working fluid that passed through the flow controller 96 is discharged to the left side of the inside of the fuel cell stack 40 through the cooling plate L62 located on the right-end of the fuel cell stack 40 and the first cooling manifold L5. The other portion of the working fluid is discharged to the left side of the fuel cell stack 40 through the fourth cooling manifold L7 and the cooling plate L61 located on the left side of the inside of the fuel cell stack 40. Accordingly, the working fluid inlet and the working fluid outlet are located on the same surface of the fuel cell stack 40.

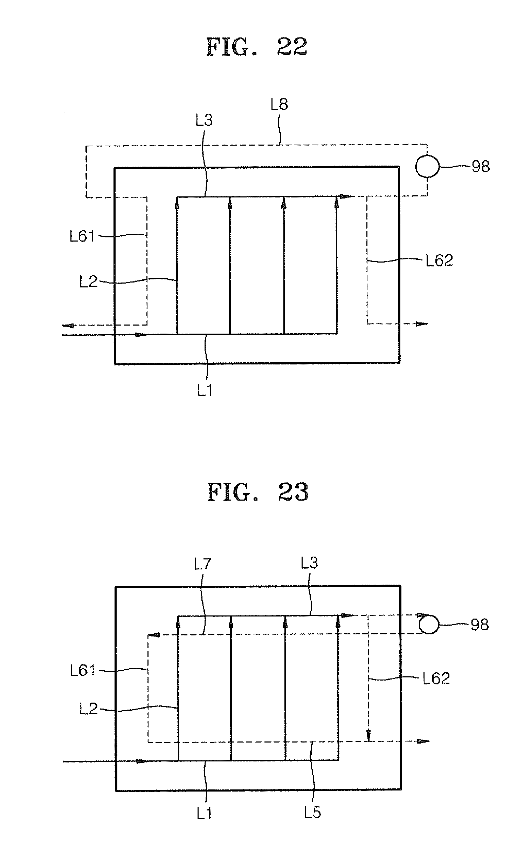

FIGS. 22 through 25 show cases of dividing working fluid streams using a flow controller. Referring to FIG. 22, the working fluid inflows to the second cooling manifold L1 and flows through the second cooling plate group L2 and the third cooling manifold L3. The working fluid that passed through the third cooling manifold L3 is divided into two streams in directions different from each other. One of the streams flows in a direction towards the outside of the fuel cell stack 40 through the cooling plate L62 located on the right-hand end of the inside of the fuel cell stack 40 and the other stream flows in a direction towards the left side of the fuel cell stack 40 where the working fluid is discharged to the outside of the fuel cell stack 40 through the flow controller 98, a connection manifold L8 which is a working fluid flow path formed on the outside of the fuel cell stack 40, and the cooling plate L61 located on a left-end of the inside of the fuel cell stack 40. The connection manifold L8 connects the flow controller 98 to the cooling plate L61 located on the inside of the fuel cell stack 40. The flow controller 98 may be the same as that of FIGS. 18 through 21. When the temperature of the cooling plate L62 located on the right-hand end is lower than that of the cooling plate L61 located on the left-hand end of the inside of the fuel cell stack 40, by controlling the flow controller 98, the amount of working fluid supplied to the cooling plate L62 may be greater than that supplied to the connection manifold L8. In this way, temperature distribution in the fuel cell stack 40 can be maintained uniform, and, in particular, the start-up time of the fuel cell stack 40 can be reduced by increasing the temperature of fuel cells located near the first cooling plate group L61 and L62, and in a normal operation, all fuel cells in the fuel cell stack 40 can be maintained in a predetermined stable temperature range.

Referring to FIG. 23, the working fluid inflows to the second cooling manifold L1 and flows through the second cooling plate group L2 and the third cooling manifold L3. The working fluid that passed through the third cooling manifold L3 is divided into two streams in directions different from each other. One of the streams flows in a direction to be discharged towards the right side of the fuel cell stack 40 through the cooling plate L62 located on the right-hand end of the inside of the fuel cell stack 40, the other stream flows in a direction towards the right side of the fuel cell stack 40 where the working fluid is discharged to the outside of the fuel cell stack 40 through the flow controller 98, the fourth cooling manifold L7, and the cooling plate L61 located on a left-end of inside of the fuel cell stack 40, and the first cooling manifold L5. In this embodiment, the two streams are discharged in one direction by reuniting in the course of a discharging process.

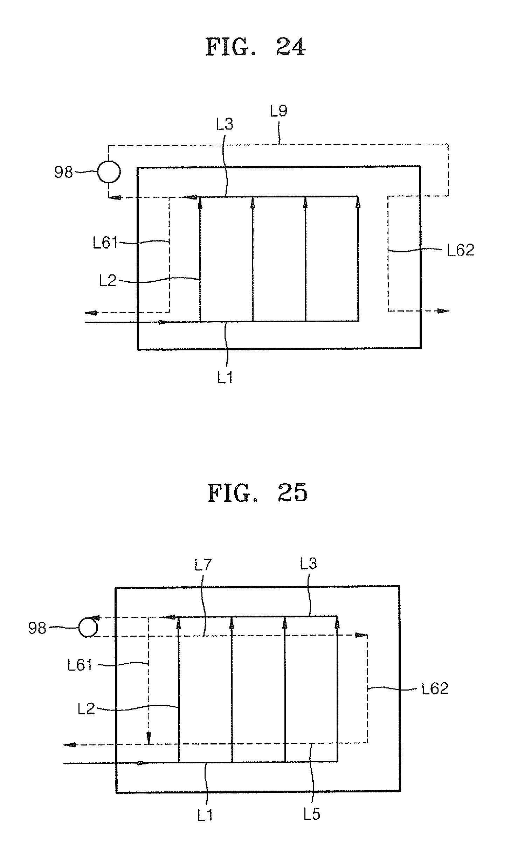

Referring to FIG. 24, the working fluid inflows to the second cooling manifold L1 and flows towards the left side in the fuel cell stack 40 through the second cooling plate group L2 and the third cooling manifold L3. The working fluid that passed through the third cooling manifold L3 is divided into two streams in directions different from each other. One of the streams flows in a direction towards the left side of the fuel cell stack 40 where the working fluid is discharged to the outside of the fuel cell stack 40 through the cooling plate L61 located on the left-hand end of the inside of the fuel cell stack 40, and the other stream flows in a direction towards the right side of the fuel cell stack 40 where the working fluid is discharged to the outside of the fuel cell stack 40 through the flow controller 98 provided on the left side of the fuel cell stack 40, the connection manifold L9 formed on the outside of the fuel cell stack 40, and the cooling plate L62 located on the right-hand end of the inside of the fuel cell stack 40. The connection manifold L9 connects the flow controller 98 to the cooling plate L62 located on the right-hand end of the inside of the fuel cell stack 40.

Referring to FIG. 25, a working fluid inflows to the second cooling manifold L1 and flows towards the left side in the fuel cell stack 40 through the second cooling plate group L2 and the third cooling manifold L3. The working fluid that passed through the third cooling manifold L3 is divided into two streams in directions different from each other. One of the streams flows in a direction towards the left side of the fuel cell stack 40 where the working fluid is discharged to the outside through the cooling plate L61 located on the left-hand end of the inside of the fuel cell stack 40, and the other stream flows in a direction towards the left side of the fuel cell stack 40 where the working fluid is discharged to the outside of the fuel cell stack 40 through the flow controller 98, the fourth cooling manifold L7, the cooling plate L62 located on the right-hand end of the inside of the fuel cell stack 40, and the first cooling manifold L5. In this embodiment, the two streams are discharged in one direction by reuniting in the course of the discharge process.

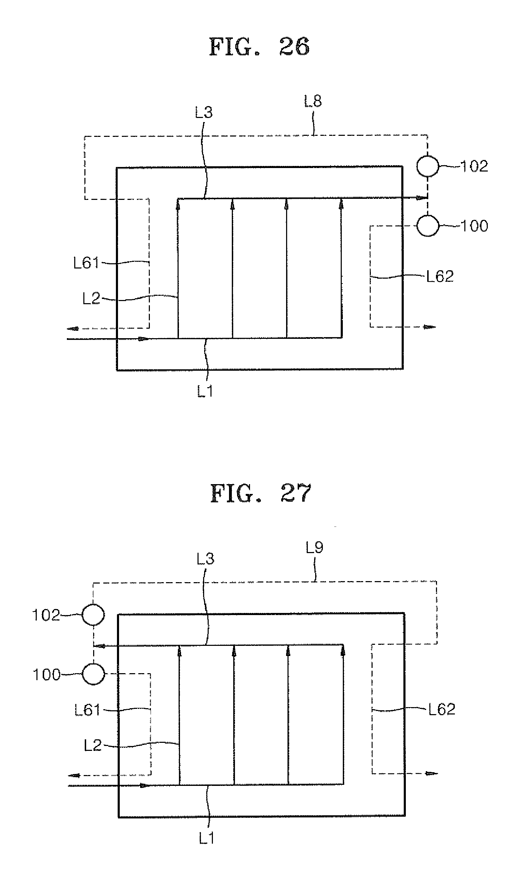

FIGS. 26 and 27 respectively show the controlling of a working fluid divided into two streams in directions different from each other by using two flow controllers. Referring to FIG. 26, the working fluid inflows to the second cooling manifold L1 and flows towards the right side of the fuel cell stack 40 through the second cooling plate group L2 and the third cooling manifold L3. At this point, the third cooling manifold L3 may extend to the right-outside of the fuel cell stack 40. The working fluid that passed through the third cooling manifold L3 is divided into two streams in directions different from each other. One of the streams flows in a direction towards the right side of the fuel cell stack 40 where the working fluid is discharged to the outside via the first flow controller 100 and the cooling plate L62 located on the right-hand end of the inside of the fuel cell stack 40, and the other stream flows in a direction towards the left side of the fuel cell stack 40 where the working fluid is discharged to the outside via the second flow controller 102, the connection manifold L8 formed on the outside of the fuel cell stack 40, and the cooling plate L61 located on the left-end of inside of the fuel cell stack 40. The connection manifold L8 connects the second flow controller 102 to the cooling plate L61. The first and second flow controllers 100 and 102 may be the same types as the flow controller 96 of FIGS. 18 through 21. Since the fuel cell stack 40 includes the first and second flow controllers 100 and 102, the working fluid streams divided into two directions can be independently controlled.

Referring to FIG. 27, the working fluid inflows to the second cooling manifold L1 and flows towards the left side of the fuel cell stack 40 through the second cooling plate group L2 and the third cooling manifold L3. In this embodiment, the third cooling manifold L3 may extend to the left-outside of the fuel cell stack 40. The working fluid that passed through the third cooling manifold L3 is divided into two streams in directions different from each other. One of the streams flows in a direction towards the left side of the fuel cell stack 40 where the working fluid is discharged to the outside via the first flow controller 100 and the cooling plate L61 located on a left-end of inside of the fuel cell stack 40, and the other stream flows in a direction towards the right side of the fuel cell stack 40 where the working fluid is discharged to the outside via the second flow controller 102, the connection manifold L9 located on the outside of the fuel cell stack 40, and the cooling plate L62 located on the right-hand end of the inside of the fuel cell stack 40. The connection manifold L9 connects the second flow controller 102 to the cooling plate L62 located inside of the fuel cell stack 40.

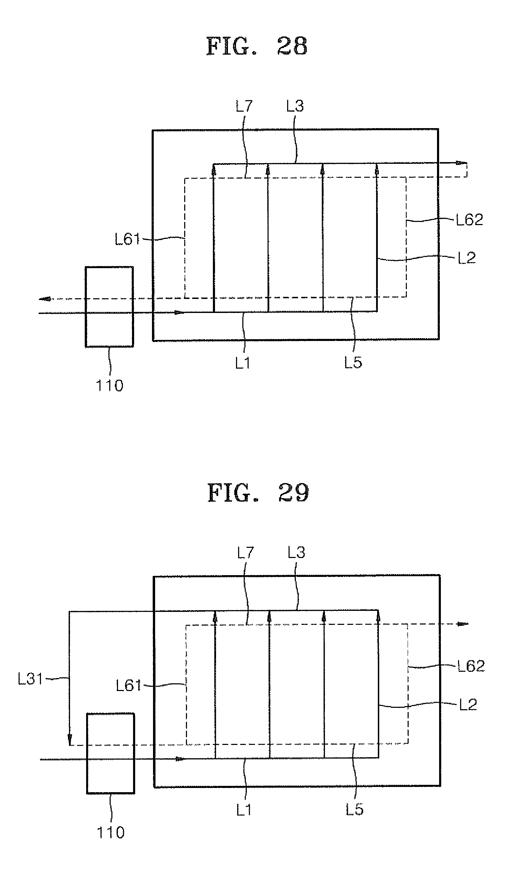

FIGS. 28 and 29 show the flow of a working fluid in a fuel cell stack and a heat exchanger on the outside thereof. Referring to FIG. 28, the working fluid inflows to the second cooling manifold L1 through the heat exchanger 110. The working fluid is discharged to the outside through the heat exchanger 110 after passing through the second cooling plate group L2, the third cooling manifold L3, the fourth cooling manifold L7, and the first cooling plate group L61 and L62 and the first cooling manifold L5. The third cooling manifold L3 and the fourth cooling manifold L7 may protrude to the outside of the fuel cell stack 40. Portions of the third cooling manifold L3 and the fourth cooling manifold L7 protruding to the outside of the fuel cell stack 40 may be connected to each other at the outside of the fuel cell stack 40. The working fluid that flows to the first cooling plate group L61 and L62 via the fourth cooling manifold L7 is in a heated state from heat generated in the cell stack 40. Accordingly, the working fluid being discharged to the outside through the heat exchanger 110 has a temperature higher than that of the working fluid that flows into the second cooling manifold L1 through the heat exchanger 110. Therefore, heat exchange occurs between the working fluid that is discharged to the outside through the heat exchanger 110 and the working fluid that flows into the heat exchanger 110. Accordingly, the temperature of the working fluid that flows into the second cooling manifold L1 is increased, thereby minimizing the temperature instability in a normal operation.

Referring to FIG. 29, the working fluid flows into the second cooling manifold L1 through the heat exchanger 110, and flows again through the heat exchanger 110 via the second cooling plate group L2 and the third cooling manifold L3. In this embodiment, heat exchange can be achieved between the working fluid that flows into the heat exchanger 110 through the third cooling manifold L3 and the working fluid that has a relatively low temperature and passes through the heat exchanger 110 in order to be supplied to the second cooling manifold L1. The working fluid that passes through the third cooling manifold L3 and the heat exchanger 110 is discharged to the right-outside of the fuel cell stack 40 via the first cooling manifold L5, the first cooling plate group L61 and L62, and the fourth cooling manifold L7. The third cooling manifold L3 may protrude to the left-outside of the fuel cell stack 40. Also, the first cooling manifold L5 may protrude to the left-outside of the fuel cell stack 40 where the heat exchanger 110 is installed. The first cooling manifold L5 may be connected to an extended portion L31 of the third cooling manifold L3 via the heat exchanger 110.

Simulation results with respect to a fuel cell stack and a method of operating the fuel cell stack will now be described. In the simulations, a surface heater and two sheets of carbon paper were used instead of an MEA of the fuel cell stack. The fuel cell stack includes a total of 48 cells, and a cooling plate is included every six cells. Also, the simulation was designed such that the temperature of working fluid was increased by using a 900 W external heater and heat generated during normal operation with a load was replaced by heat generated from the surface heater. In order to prove the superiority of the fuel cell stack and the method of operating the fuel cell stack according to an embodiment of the present invention, the working fluid was allowed to flow in a method according to the current embodiment, for example, the method described with reference to FIG. 13.

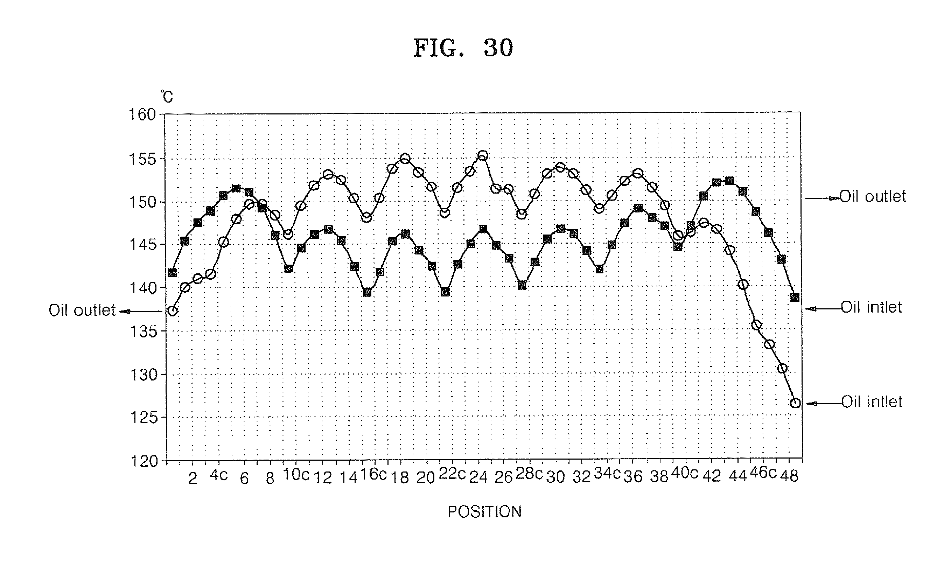

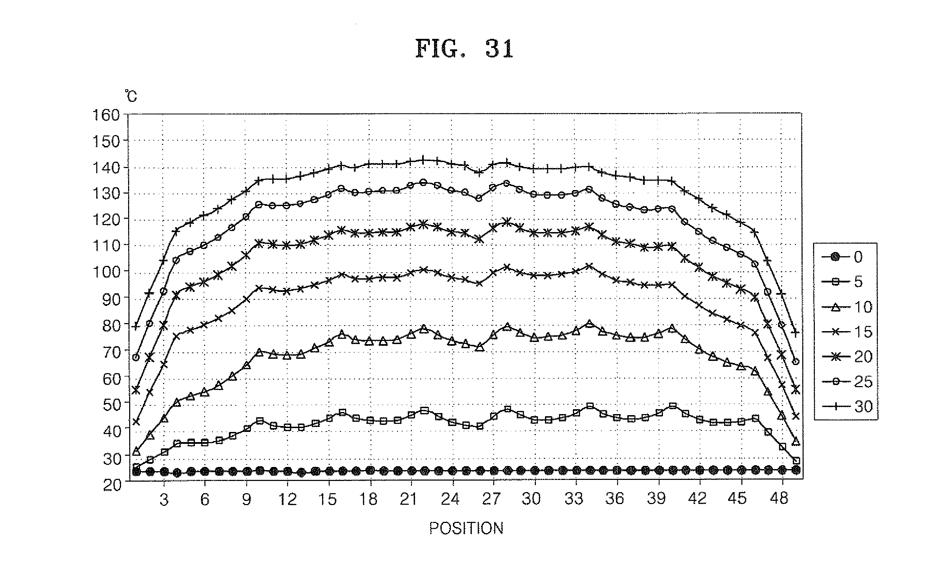

FIG. 30 is a graph showing the temperature distribution in a fuel cell stack when a working fluid was allowed to flow according to a conventional method and a method according to an embodiment. In FIG. 30, the curve indicated by open circles, o, represents the simulation result of the conventional method, and a graph indicated by closed squares, ■ represents the simulation result of the method according to an embodiment of the present invention. The X-axis represents positions of bipolar plates, for example, "3" on the X-axis indicates the third bipolar plate when bipolar plates and cooling plates were arranged from one end of the fuel cell stack to the opposite end of the fuel cell stack. "10c" and "16c", etc. on the X-axis indicates positions of cooling plates located between bipolar plates. For example, "10c" denotes a cooling plate positioned 10^{th} sequence in a complete arrangement that includes bipolar plates and cooling plates. The Y-axis represents temperatures as a function of the positions of the bipolar plates and cooling plates. The same descriptions of the X-axis and Y-axis apply to the graphs of FIGS. 31 through 33.

When the graphs in FIG. 30 are compared, the temperature difference between the maximum temperature and the minimum temperature was approximately 14°C in the method of operating a fuel cell stack according to the current embodiment, but that in the conventional method was approximately 29 °C. The standard deviation of temperature in the method of operating a fuel cell stack according to the current embodiment was approximately 3.1 °C while that in the conventional method was approximately 6.7 °C. Also, in the method of operating a fuel cell stack according to the current embodiment, the temperature of both ends of inside of the fuel cell stack, that is, near end plates, was higher than that in the conventional method.

Table 1 summarizes the simulation results.

**[Table 1]**

| | Conventional method | Current embodiment |
|---|---|---|
| Maximum temperature (°C) | 155 | 152 |
| Minimum temperature (°C) | 126 | 138 |
| Maximum-minimum (°C) | 29 | 14 |
| Standard deviation (°C) | 6.7 | 3.1 |

As seen in Table 1, the method of operating a fuel cell stack according to the current embodiment had a smaller temperature difference between maximum and minimum temperatures in a fuel cell stack and had a smaller standard deviation when compared to the conventional method. These results indicate that the temperature distribution in a fuel cell stack and in a method of operating the fuel cell stack according to the current embodiment is much more uniform and stable than in a conventional method.

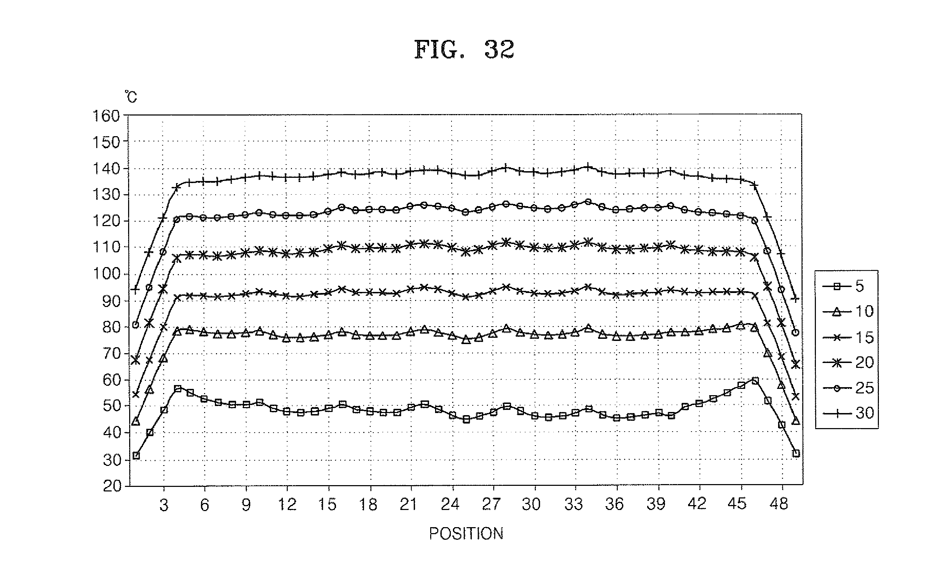

FIG. 31 is a graph showing temperature change in a fuel cell stack as a function of elapsed time in a conventional method, and FIG. 32 is a graph showing temperature change in a fuel cell stack as a function of elapsed time in a method of operating a fuel cell stack according to the current embodiment. Referring to FIG. 31, the temperature of cells near end plates was approximately 78 °C at an elapsed time of 30 minutes in the conventional method.

However, referring to FIG. 32, in the method of operating a fuel cell stack according to the current embodiment, the temperature of cells near end plates was approximately 90 °C. That is, the temperature of cells near end plates was improved by approximately 12 °C in the method according to the current embodiment when compared to the conventional method.

Also, when FIG. 31 and FIG. 32 are compared, it can be seen that the time for all of the bipolar plates in a fuel cell stack to reach 100 °C was shorter in the method according to the current embodiment than in the conventional method. Also, in connection with the temperature of cells located between cooling plates included on both ends within the fuel cell stack, in the case of the conventional method, the temperature distribution had a parabolic shape at each elapsed time. However, in the method according to the current embodiment, it is seen that all cells had a uniform temperature distribution.

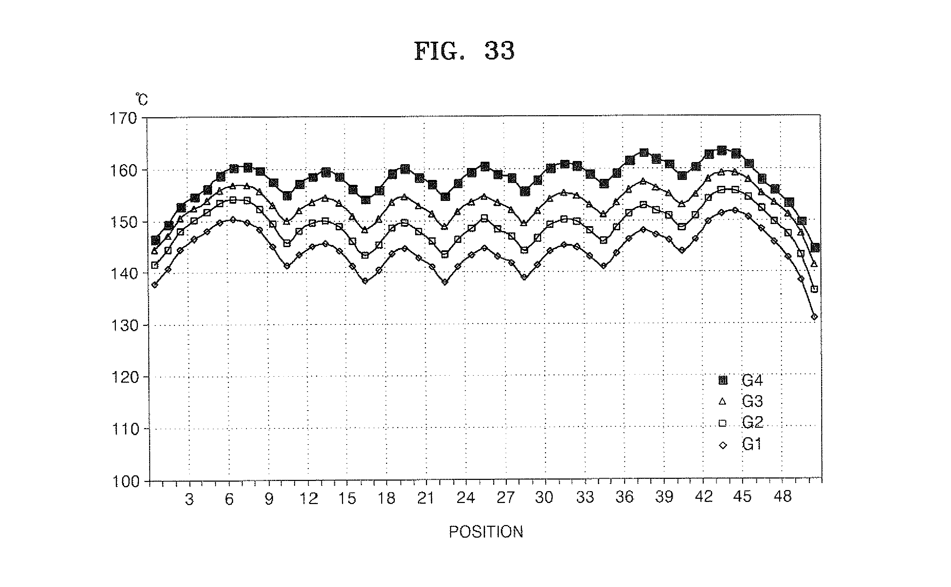

FIG. 33 is a graph showing the temperature distribution in a fuel cell stack according to the temperature variation of a working fluid that is supplied through a heat exchanger 110 as in the case of FIGS. 28 and 29.

In FIG. 33, the first through fourth curves G1, G2, G3, and G4 respectively represent the results of temperature distributions when the working fluid that inflowed to the fuel cell stack had temperatures of 73, 88, 104, and 122 °C, respectively.

When the first through fourth curves G1, G2, G3, and G4 are compared, it can be seen that the average temperature increased as a function of the increase in the temperature of the working fluid that inflowed. Also, the difference between the maximum and minimum temperatures in the method according to the current embodiment was less than that in the conventional method.

A fuel cell stack and a method of operating the same which reduce a temperature deviation according to a position in a stack by using heat generated in the stack when the stack operates has been described. The stack for reducing the temperature deviation in the stack and the method of operating the stack are not limited to a fuel cell stack and may be applied to a heat source that generates heat. For example, the afore-described stack and method may be applied to a heat source having any of various stacks and a method of operating the heat source. In addition, the stack and the method of operating the stack may also be applied to a battery pack that is an example of a heat source.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A method of operating a stack (40) having a plurality of cells and a plurality of cooling plates, the method comprising:
in a start-up operation, supplying a working fluid to a first group (42,44) of the cooling plates; and re-supplying the working fluid passed through the first group of the cooling plates to a second group (48) of the cooling plates,
and, in a load operation, supplying a working fluid to the second group (48) of the cooling plates; and re-supplying the working fluid passed through the second group of the cooling plates to the first group (42,44) of the cooling plates.

2. The method of claim 1, wherein the stack (40) is a fuel cell stack and the cells are fuel cells.

3. The method of claim 2, wherein the first group (42,44) of the cooling plates are located on both ends of the fuel cell stack and the second group of the cooling plates are located in a central region of the fuel cell stack.

4. The method of any preceding claim, wherein each cooling plate of the fuel cell stack belong to one of the first group and the second group.

5. The method of any preceding claim further comprising preheating the working fluid supplied to the first group in the start-up operation by circulating in the fuel cell stack or at the outside of the fuel cell stack using a heating device.

6. The method of any preceding claim, further comprising controlling a flow rate of the working fluid supplied to the second group of the cooling plates.

7. The method of any preceding claim, wherein the working fluid passed through the first group of the cooling plates is divided into two streams in directions different from each other.

8. The method of claim 1, wherein the stack is a battery pack and the cells are battery cells.

9. A stack (40) comprising:
a plurality of cells;
first (42,44) and second (48) groups of cooling plates located between the cells, each cooling plate including a working fluid inlet and a working fluid outlet;
a working fluid supply manifold (46,64) in fluid communication with one or more of the working fluid inlets of the first group of cooling plates to supply a working fluid to the first group of cooling plates; and
a working fluid resupply manifold (50,52) in fluid communication with one or more of the working fluid outlets of the first group of cooling plates and one or more of the working fluid inlets of the second group of cooling plates to resupply the working fluid passed through the first group of cooling plates to the second group of cooling plates;
and optionally further comprising a working fluid outlet manifold (45) in fluid communication with one or more of the working fluid outlets of the second group of cooling plates to convey the working fluid passed through the second group of cooling plates to outside of the fuel cell stack.

10. The stack of claim 9, wherein the stack (40) is a fuel cell stack and the cells are fuel cells, and optionally wherein each cooling plate in the fuel cell stack belongs to one of the first group (42,44) and the second group (48)..

11. The stack of claim 9 or 10, wherein the first group (42,44) of cooling plates are located on both ends of the fuel cell stack and the second group (48) of cooling plates are located in a central region of the fuel cell stack.

12. The stack of claim 9, 10 or 11, wherein the number of fuel cells per cooling plate in a central region of the fuel cell stack is greater than that in both end regions of the fuel cell stack, and optionally wherein the number of fuel cells per cooling plate on one end of the fuel cell stack is greater than that on the other end of the fuel cell stack.

13. The stack of any of claims 9 to 12, further comprising a flow controller on the working fluid resupply manifold.

14. The stack of claim 12, wherein
(i) the working fluid supply manifold (46) is in fluid communication with the working fluid inlet of each of the first group of cooling plates;
(ii)the working fluid resupply manifold is in fluid communication with the working fluid outlet of each of the first group of cooling plates; and/or
(iii) wherein the working fluid resupply manifold (50,52) is in fluid communication with the working fluid inlet of each of the second group of cooling plates.

15. The stack of claim 9, wherein the stack is a battery pack and the cells are battery cells.
